# EUROPEAN PATENT SPECIFICATION

(11) **EP 0 568 322 B1**
(45) Date of publication and mention of the grant of the patent: **13.08.1997**
(21) Application number: 93303288.0
(22) Date of filing: 27.04.1993
(51) Int. Cl.: A47J 36/02

(54) **A cooking utensil and a method of forming same**
Kochgeschirr und Verfahren zu dessen Gestaltung
Ustensil de cuisson et méthode de son façonnage

(30) Priority: 01.05.1992 GB 9209478
(43) Date of publication of application: 03.11.1993
(73) Proprietor: MEYER MANUFACTURING CO., LTD, HONG KONG (HK)
(72) Inventor: Cheng, Stanley Kin-Sui, Kowloon, Hong Kong (HK)
(74) Representative: Findlay, Alice Rosemary

(56) References cited:
- EP-A- 0 510 546
- WO-A-89/01534
- GB-A- 1 153 823
- US-A- 2 320 327
- US-A- 3 271 653
- US-A- 3 495 735

## Description

This invention relates to a cooking utensil more particularly but not exclusively to cooking pans used in circumstances where foodstuffs are likely to adhere to one or more surfaces thereon.

There has been proposed in US4768427 in the name of the present Applicants, a process for providing an aluminium pan with a corrugated contact surface defined by concentric circular grooves. The surface is coated with a non-stick coating to provide a pan, which when used, has a reduced degree of adherence of foodstuffs as a consequence of the reduced area of contact of the corrugated surface, and during cleaning and/or removal of any foodstuff that has so adhered, contact between any cleaning tool or device is concentrated at the peaks of the corrugated surface with the troughs or valleys being left relatively unscathed so that any non-stick surface thereon is substantially preserved.

As aluminium is a relatively soft metal, forming the corrugated surface may be readily effected by machining the surface of the pan prior to a hardening (anodizing) process. However, for pans made of other materials, for example steel, such as disclosed in GB-A-1153823, which are of substantially increased hardness, machining of the corrugations is not a practical manufacturing technique. It is an object of the invention to provide cooking apparatus, and a method of producing same which is more applicable for use with pans made of harder materials.

According to the invention, there is provided a cooking utensil as claimed in claim 1.

Preferably, the corrugated surface is formed by forging or pressing.

Preferably, the substrate is roughened by grit blasting and the non-stick layer, preferably a PTFE multi-layer coating, is applied to the grit blasted, arc-sprayed surface.

A pan formed in accordance with the invention has a corrugated surface giving the advantages of the pan of US4768427, with the additional benefits of formation from a relatively hard material such as stainless steel and improved non-stick layer wearability, due to the combined anchoring effect of grit blasting and arc-spraying the substrate.

According to the invention in a second aspect, there is provided a method of forming a cooking surface on a cooking utensil as claimed in claim 7.

An embodiment of the invention will now be described by way of example with reference to the accompanying drawings in which:
Figure 1 is a plan view of a section of a frying pan being an embodiment of the invention;
Figure 2 is a sectional view through the pan; and
Figure 3 is a close-up of the indicated area in Figure 2.

With reference to the figures, an embodiment of the invention is shown which is a kitchen utensil in the form of a frying pan.

The frying pan is provided with a heat receiving substrate 100 comprised of a heat receiving stainless steel layer 105, a cooking surface substrate 110 both formed from stainless steel of standard composition (ie Chromium 18%, Nickel 5%, Manganese 8.5% and the remainder Carbon Steel), which together sandwich an aluminium layer 115.

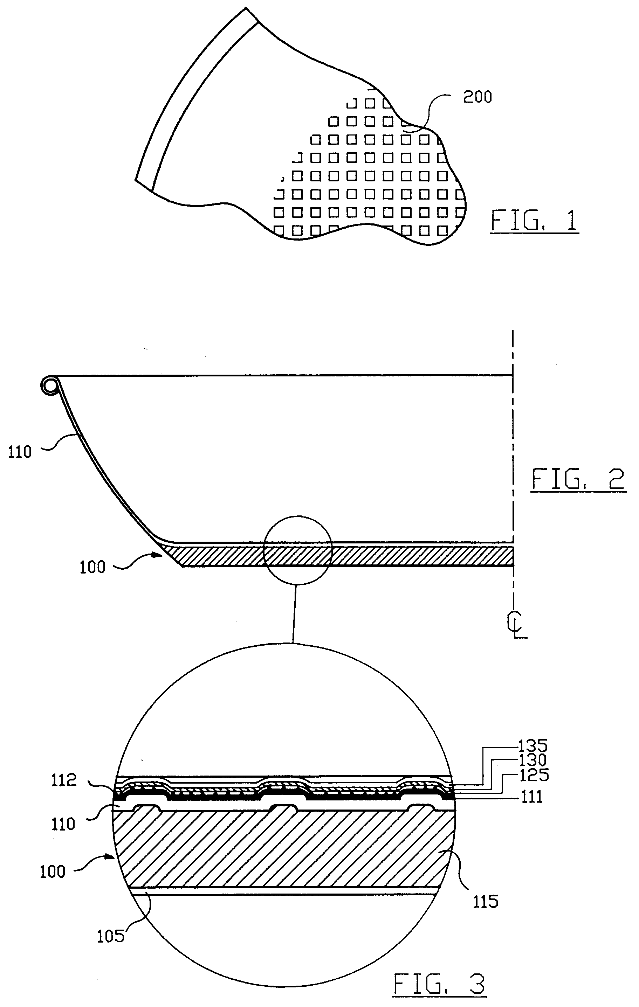

The substrate 110 is provided with a pattern of corrugations 200 (see Figure 1) forming square depressions of depth 0.30mm side length 2.85mm formed between ridges of width 1.65mm. The corrugations are formed in the substrate 110 by application of a circular die on the base of the pan under pressure, eg in a stamping press optionally under the influence of heat.

In order to provide adhesion for a non-stick coating, the substrate 110 is then grit-blasted to form a grit blasted surface 111, and then the substrate is arc-sprayed with a stainless steel alloy wire of the same composition as the pan substrate 110 to form a particulate arc sprayed layer 112.

The grit-blasting creates an initial rough surface 111 with the arc-spraying then creating a further, rougher surface with greater surface area for good adhesion of the non-stick coating. The arc-sprayed substrate also improves the coating's abrasion resistance.

The non-stick coating is sprayed onto the treated substrate in three layers, a primer coat, PTFE intermediate coat and PTFE top coat 125, 130, 135 in a manner known per se.

## Claims

1. A cooking utensil including a substrate (110) formed from stainless steel, with a surface layer (111) sprayed thereon upon which a non-stick coating (125, 130, 135) is disposed to form a cooking surface, characterised in that the substrate has a corrugated surface formed through stamping of the substrate and the sprayed layer (111) is an arc-sprayed layer (112) equally formed from stainless steel.

2. A cooking utensil as claimed in claim 1 comprising a stainless steel layer (105) an aluminium layer (115) sandwiched between the stainless steel layer (105) and stainless steel substrate (110).

3. A cooking utensil as claimed in any one of the preceding claims wherein the corrugated surface is formed as a grid-like pattern.

4. A cooking utensil as claimed in claim 3 wherein the grid-like pattern is formed by a plurality of square depressions.

5. A cooking utensil as claimed in claim 4 wherein the square depressions are of depth of 0.3 mm and of side length of 2.85 mm.

6. A cooking utensil as claimed in any one of the preceding claims wherein the substrate is grit-blasted to provide a rough surface, the arc-sprayed layer (112) being provided on top of the grit-blasted surface.

7. A method of forming a cooking surface or a cooking utensil comprising the steps of:
- providing a metal substrate with a surface layer sprayed thereon, the substrate being formed from stainless steel,
- applying a non-stick coating to the sprayed surface,
characterised by
- forming the substrate with a corrugated pattern on a surface thereof by application of a die under pressure,
- grit-blasting the corrugated surface, and
- arc-spraying the grit-blasted surface to form said surface layer which is equally formed from stainless steel.

8. A method as claimed in claim 7 wherein heat is applied when the die is applied.

9. A method as claimed in claim 7 or claim 8 wherein the non-stick layer is a multi-layer PTFE coating.

10. A method as claimed in any one of claims 7 to 9 wherein the die is formed with a grid-like pattern.

11. A method as claimed in claim 10 wherein the grid-like pattern forms a plurality of rectangular depressions.

12. A cooking utensil formed by the method of any one of the claims 7 to 11.

## Patentansprüche

1. Kochgeschirr, das eine Trägerschicht (110) aus nichtrostendem Stahl mit einer darauf aufgespritzten Oberflächenschicht (111) umfaßt, die eine als Kochfläche dienende Antihaft-Oberflachenbeschichtung (125, 130, 135) trägt, **dadurch gekennzeichnet, daß** die Trägerschicht eine darin eingepreßte geriffelte Oberfläche aufweist und daß es sich bei der aufgespritzen Schicht (111) um eine im Lichtbogen-Metallspritzverfahren aufgetragene Schicht handelt, die ebenfalls aus rostfreiem Stahl besteht.

2. Kochgeschirr gemäß Anspruch 1, das eine Schicht aus rostfreiem Stahl (105) sowie eine Aluminiumschicht (115) umfaßt, die zwischen dieser Schicht rostfreien Stahls (105) und der ebenfalls aus rostfreiem Stahl bestehenden Trägerschicht (110) in Sandwich-Bauweise angeordnet ist.

3. Kochgeschirr gemäß einem der vorstehenden Ansprüche, wobei die geriffelte Oberfläche in Form eines Gitternetzes ausgeführt ist.

4. Kochgeschirr gemäß Anspruch 3, wobei die Gitternetzform von einer Vielzahl quadratischer Vertiefungen gebildet wird.

5. Kochgeschirr gemäß Anspruch 4, wobei die quadratischen Vertiefungen eine Tiefe von 0,3 mm und eine Seitenlänge von 2,85 mm aufweisen.

6. Kochgeschirr gemäß einem der vorstehenden Ansprüche, wobei die Trägerschicht zur Aufrauhung ihrer Oberfläche mit Sand, Stahlsand, Stahlkies bzw. Schrot gestrahlt und auf die so gestrahlte Oberläche die im Lichtbogenverfahren aufgespritzte Schicht (112) aufgetragen wird.

7. Verfahren zur Herstellung einer Kochfläche oder eines Kochgeschirrs, das u.a.
- die Bereitstellung einer metallischen Trägerschicht aus nichtrostendem Stahl mit einer darauf aufgespritzten Oberflächenschicht und
- den Auftrag einer Antihaftschicht auf diese aufgespritzte Oberfläche umfaßt,
**dadurch gekennzeichnet, daß**
- eine Oberfläche der Trägerschicht mit einem geriffelten Muster ausgeführt ist, das durch Einwirkung eines Preßwerkzeugs unter Druck hergestellt wird;
- diese geriffelte Fläche mit Sand, Stahlsand, Stahlkies bzw. Schrot gestrahlt wird;
- auf die so gestrahlte Fläche im Lichtbogen-Metallspritzverfahren eine ebenfalls aus nichtrostendem Stahl bestehende Schicht aufgespritzt wird.

8. Verfahren gemäß Anspruch 7, wobei der Einsatz des Preßwerkzeuges unter gleichzeitigem Erhitzen erfolgt.

9. Verfahren gemäß Anspruch 7 oder 8, wobei die Antihaftschicht aus einer mehrlagigen PTFE-Beschichtung besteht.

10. Verfahren gemäß einem der Ansprüche 7 - 9, wobei das Preßwerkzeug ein gitternetzförmiges Muster aufweist.

11. Verfahren gemäß Anspruch 10, wobei das gitternetzförmige Muster eine Vielzahl rechteckiger Vertiefungen aufweist.

12. Kochgeschirr, daß mittels eines Verfahrens gemäß einem der Ansprüche 7 - 11 hergestellt wird.

## Revendications

1. Ustensile de cuisson comprenant un substrat (110) en acier inoxydable, et une couche superficielle (111) déposée par pulvérisation, sur laquelle un revêtement anti-adhésif (125,130,135) est disposé de manière à former une surface de cuisson, caractérisé en ce que le substrat possède une surface ondulée formée par estampage du substrat et que la couche (111) déposée par pulvérisation est une couche (112) déposée par pulvérisation par arc électrique, également formée d'acier inoxydable.

2. Ustensile de cuisson selon la revendication 1, comprenant une couche d'acier inoxydable (105) et une couche d'aluminium (115) enserrée entre la couche d'acier inoxydable (105) et le substrat en acier inoxydable (110).

3. Ustensile de cuisson selon l'une quelconque des revendications précédentes, dans lequel la surface ondulée est agencée sous la forme d'une configuration en forme de grille.

4. Ustensile de cuisson selon la revendication 3, la configuration en forme de grille est formée d'une pluralité de renfoncements carrés.

5. Ustensile de cuisson selon la revendication 4, dans lequel les renfoncements carrés possèdent une profondeur de 0,3 mm et ont des côtés d'une longueur de 2,85 mm.

6. Ustensile de cuisson selon l'une quelconque des revendications précédentes, dans lequel le substrat est soumis à un grenaillage de manière à présenter une surface rugueuse, la couche (110) déposée par pulvérisation par arc étant prévue sur la face supérieure de la surface soumise au grenaillage.

7. Procédé pour former une surface de cuisson ou un ustensile de cuisson comprenant les étapes consistant à :
- prendre un substrat métallique sur lequel est déposée par pulvérisation une couche superficielle, le substrat étant formé d'acier inoxydable,
- appliquer un revêtement anti-adhésif à la surface déposée par pulvérisation,
caractérisé en ce
- qu'on forme sur une surface du substrat une configuration ondulée par application d'une matrice sous pression,
- qu'on applique un grenaillage à la surface ondulée, et
- qu'on applique une pulvérisation par arc à la surface ayant subi le grenaillage pour former ladite couche superficielle qui est également constituée d'acier inoxydable.

8. Procédé selon la revendication 7, selon lequel on applique une chaleur lorsqu'on applique la matrice.

9. Procédé selon la revendication 7 ou 8, selon lequel la couche anti-adhésive est un revêtement de PTFE à couches multiples.

10. Procédé selon l'une quelconque des revendications 7 à 9, selon lequel la matrice possède une configuration en forme de grille.

11. Procédé selon la revendication 10, selon lequel la configuration en forme de grille forme une pluralité de renfoncements rectangulaires.

12. Ustensile de cuisson formé à l'aide du procédé selon l'une quelconque des revendications 7 à 11.
